(19) Europäisches Patentamt / European Patent Office / Office européen des brevets

(11) EP 3 305 856 A1

(12) **EUROPEAN PATENT APPLICATION**
published in accordance with Art. 153(4) EPC

(43) Date of publication:
**11.04.2018 Bulletin 2018/15**

(21) Application number: **16800028.9**

(22) Date of filing: **24.05.2016**

(51) Int Cl.:
***C08L 101/00*** *(2006.01)*
***C08J 5/24*** *(2006.01)*
***C08L 63/00*** *(2006.01)*
***H01B 3/40*** *(2006.01)*
***B32B 15/08*** *(2006.01)*
***C08K 3/22*** *(2006.01)*
***C09K 5/14*** *(2006.01)*

(86) International application number:
**PCT/JP2016/065360**

(87) International publication number:
**WO 2016/190323 (01.12.2016 Gazette 2016/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.05.2015 JP 2015105425**

(71) Applicant: **Hitachi Chemical Co., Ltd.**
**Chiyoda-ku**
**Tokyo 100-6606 (JP)**

(72) Inventors:
- **TAKEZAWA, Yoshitaka**
  **Tokyo 100-6606 (JP)**
- **SONG, Shihui**
  **Tokyo 100-6606 (JP)**
- **FUKUSHIMA, Keiji**
  **Tokyo 100-6606 (JP)**
- **TANASE, Tomokazu**
  **Hitachi-shi**
  **Ibaraki 319-1292 (JP)**
- **KATOH, Tetsuji**
  **Hitachi-shi**
  **Ibaraki 319-1292 (JP)**
- **SANO, Akihiro**
  **Hitachi-shi**
  **Ibaraki 319-1292 (JP)**
- **KOJIMA, Hiroaki**
  **Hitachi-shi**
  **Ibaraki 319-1292 (JP)**

(74) Representative: **Hoffmann Eitle**
**Patent- und Rechtsanwälte PartmbB**
**Arabellastraße 30**
**81925 München (DE)**

(54) **RESIN COMPOSITION, RESIN SHEET, PREPREG, INSULATING MATERIAL, RESIN-SHEET CURED ARTICLE, AND HEAT DISSIPATING MEMBER**

(57) A resin composition contains: a thermosetting resin; a thermally conductive filler; and mica; in which, when the thermally conductive filler is divided into a filler group (A) having a particle diameter of from 10 μm to 100 μm, a filler group (B) having a particle diameter of from 1.0 μm to smaller than 10 μm, and a filler group (C) having a particle diameter of from 0.1 μm to smaller than 1.0 μm, a ratio of the filler group (C) with regard to the thermally conductive filler, based on volume, is larger than a ratio of the filler group (B) with regard to the thermally conductive filler, based on volume.

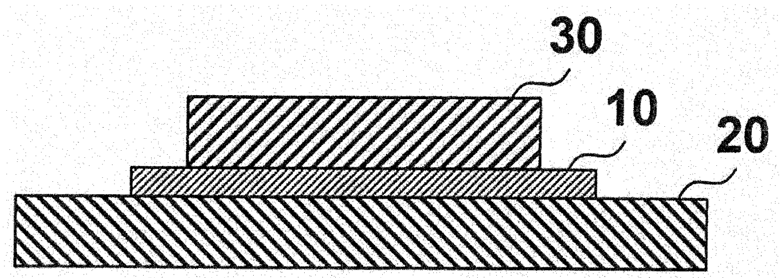


FIG.1



Printed by Jouve, 75001 PARIS (FR)

## Description

### Technical Field

The present invention relates to a resin composition, a resin sheet, a prepreg, an insulator, a resin sheet cured product, and a heat dissipator.

### Background Art

In recent years, due to miniaturization of electric devices, the amount of heat generated per unit volume has increased, and it is demanded to increase the thermal conductivity of an insulating material constituting electric devices. Energy density has increased due to high performance of electric devices, and insulating materials have been exposed to environments of ever-increasing electric field. Accordingly, in addition to realizing high thermal conductivity, improvement of electrical degradation lifetime is demanded for an insulating material in such a manner that dielectric breakdown does not occur even when a voltage is applied to the insulating material for a long period of time.

For increasing the thermal conductivity of the insulating material, a method of compositing an epoxy resin and a thermally conductive filler is known. As the epoxy resin, bisphenol A type epoxy resin, novolak type epoxy resin, or the like is known. In recent years, a method for improving the thermal conductivity of an epoxy resin itself has also been studied. For example, in Japanese Patent Application Laid-Open (JP-A) No. 2005-206814 and JP-A No. 2014-201610, a method of orderly arranging epoxy monomers having a mesogenic structure to increase the thermal conductivity of an epoxy resin itself has been studied. As the thermally conductive filler, for example, silica, alumina, magnesium oxide, boron nitride, aluminum nitride, silicon nitride, and silicon carbide are known.

## SUMMARY OF INVENTION

### Technical Problem

Even when high thermal conductivity is achieved in a conventional insulating material, an electric tree may develop due to migration generated in a high electric field, and there is a risk of dielectric breakdown.

Accordingly, an object of the present invention is to provide a resin composition capable of forming an insulating material having excellent electrical degradation lifetime while maintaining high thermal conductivity, and a resin sheet, a prepreg, an insulator, a resin sheet cured product, and a heat dissipator using the resin composition.

### Solution to Problem

In order to solve the above problems, the present inventor has conducted studies to find that it is effective to add mica in a resin composition in order to improve the electrical degradation lifetime. As a result of studies on the particle size distribution of a thermally conductive filler, regarding a resin composition containing a thermosetting resin, a thermally conductive filler and mica, in which, when the thermally conductive filler is divided into a filler group (A) having a particle diameter of from 10 μm to 100 μm, a filler group (B) having a particle diameter of from 1.0 μm to smaller than 10 μm, and a filler group (C) having a particle diameter of from 0.1 μm to smaller than 1.0 μm, a ratio of the filler group (C) with regard to the thermally conductive filler, based on volume, is larger than a ratio of the filler group (B) with regard to the thermally conductive filler, based on volume, it is found that an insulating material obtained by curing the resin composition has excellent electrical degradation lifetime and high thermal conductivity, and then the result led to the present invention.

Specific embodiments for achieving the object are as follows.

<1> A resin composition including:

a thermosetting resin;
a thermally conductive filler; and
mica,
in which, when the thermally conductive filler is divided into a filler group (A) having a particle diameter of from 10 μm to 100 μm, a filler group (B) having a particle diameter of from 1.0 μm to smaller than 10 μm, and a filler group (C) having a particle diameter of from 0.1 μm to smaller than 1.0 μm, a ratio of the filler group (C) with regard to the thermally conductive filler, based on volume, is larger than a ratio of the filler group (B) with regard to the thermally conductive filler, based on volume.

<2> The resin composition according to <1>, in which, when a total volume of the thermally conductive filler is 100% by volume, a ratio of the filler group (A) is from 50% by volume to 90% by volume, a ratio of the filler group (B) is from 1% by volume to 30% by volume, and a ratio of the filler group (C) is from 5% by volume to 40% by volume.
<3> The resin composition according to <1> or <2>, in which an average particle diameter of the mica is from 1 μm to 10 μm.
<4> The resin composition according to any one of <1> to <3>, in which a content ratio of the mica is from 0.1% by volume to 5% by volume with regard to a total solid content.
<5> The resin composition according to any one of <1 > to <4>, in which a content ratio of the thermally conductive filler is from 60% by volume to 80% by volume with regard to a total solid content.
<6> The resin composition according to any one of <1> to <5>, in which the thermosetting resin comprises an epoxy monomer having a mesogenic structure or a polymer thereof.
<7> The resin composition according to any one of <1> to <6>, in which the thermally conductive filler comprises alumina.
<8> A resin sheet formed by molding the resin composition according to any one of <1> to <7> into a sheet shape.
<9> A prepreg including a fiber substrate; and the resin composition according to any one of <1> to <7>, impregnated in the fiber substrate.
<10> An insulator including cured product of the resin composition according to any one of <1> to <7>.
<11> A resin sheet cured product that is a heat-treated product of the resin sheet according to <8>.
<12> A heat dissipator including:

a first metal member;
a second metal member; and
a resin cured product layer that is a cured product of the resin composition according to any one of <1> to <7>, disposed between the first metal member and the second metal member.

<13> The heat dissipator according to <12>, in which an average thickness of the resin cured product layer is from 100 μm to 300 μm.

Advantageous Effects of Invention

According to the present invention, a resin composition capable of forming an insulating material having excellent electrical degradation lifetime while maintaining high thermal conductivity, and a resin sheet, a prepreg, an insulator, a resin sheet cured product, and a heat dissipator using the resin composition can be provided.

BRIEF DESCRIPTION OF DRAWINGS

Fig. 1 is a schematic cross-sectional view illustrating an example of a heat dissipator in the present embodiment.

DESCRIPTION OF EMBODIMENTS

Hereinafter, embodiments of the resin composition, the resin sheet, the prepreg, the insulator, the resin sheet cured product, and the heat dissipator of the present invention will be described in detail. However, the present invention is not limited to the following embodiments. In the following embodiments, the constituent elements (including the element processes and the like) are not indispensable except when particularly explicitly mentioned, when it is considered to be obviously indispensable in principle, or the like. The same applies to numerical values and ranges thereof, and does not limit the present invention.
Herein, a numerical range indicated by "to" means a range including the numerical values described before and after "to" as the minimum value and the maximum value, respectively.
In a stepwise numerical range described herein, the upper limit value or the lower limit value described in one numerical range may be replaced by the upper limit value or the lower limit value of another stepwise numerical range. In the numerical ranges described herein, the upper limit value or the lower limit value of the numerical value range may be replaced with the values indicated in the Examples.
Herein, when a plurality of kinds of substances corresponding to each component is present in a composition, the content or the content ratio of each component in the composition means the total of the plurality of kinds of substances present in the composition, unless otherwise specified. Herein, the particle diameter of each component in a composition means, when a plurality of kinds of particles corresponding to each component are present in the composition, a value for a mixture of the plurality of kinds of particles present in the composition, unless otherwise specified. Herein, the term "layer" includes not only a configuration of a shape formed on the entire surface but also a configuration of a shape

formed on a part when observed as a plan view. The term "layer" refers to stacking of layers, two or more layers may be bonded, or two or more layers may be removable.

< Resin Composition >

The resin composition in the present embodiment is a resin composition containing a thermosetting resin, a thermally conductive filler, and mica, in which, when the thermally conductive filler is divided into a filler group (A) having a particle diameter of from 10 μm to 100 μm, a filler group (B) having a particle diameter of from 1.0 μm to smaller than 10 μm, and a filler group (C) having a particle diameter of from 0.1 μm to smaller than 1.0 μm, a ratio of the filler group (C) with regard to the thermally conductive filler, based on volume, is larger than a ratio of the filler group (B) with regard to the thermally conductive filler, based on volume.

When, regarding a thermally conductive filler in a resin composition, the ratio of the filler group (C) in the thermally conductive filler, based on volume, is larger than the ratio of the filler group (B) in the thermally conductive filler, based on volume, a dielectric breakdown of an insulating material formed by the resin composition is prevented and the electrical degradation lifetime improves. This is presumably because when, regarding a thermally conductive filler in a resin composition, the ratio of the filler group (C) in the thermally conductive filler, based on volume, is larger than the ratio of the filler group (B) in the thermally conductive filler, based on volume, the inhibitory effect against electric tree development by mica works effectively.

Hereinafter, each component constituting the resin composition in the present embodiment will be described.

(Thermally Conductive Filler)

A thermally conductive filler contained in the resin composition in the present embodiment is not particularly limited as long as it is a thermally conductive filler in which, when the thermally conductive filler is divided into a filler group (A) having a particle diameter of from 10 μm to 100 μm, a filler group (B) having a particle diameter of from 1.0 μm to smaller than 10 μm, and a filler group (C) having a particle diameter of from 0.1 μm to smaller than 1.0 μm, a ratio of the filler group (C) with regard to the thermally conductive filler, based on volume, is larger than a ratio of the filler group (B) with regard to the thermally conductive filler, based on volume.

Whether or not a thermally conductive filler used in the present embodiment satisfies the above conditions can be judged by calculating a sum of volumes of particles having particle diameters falling within the above range in a volume cumulative particle size distribution of the filler to be used. The volume cumulative particle size distribution is measured using a laser diffraction method. A particle size distribution measurement using the laser diffraction method can be carried out using a laser diffraction scattering particle size distribution measuring apparatus (for example, LS13 manufactured by Beckman Coulter, Inc.). The filler dispersion liquid for measurement is obtained by adding a thermally conductive filler into a 0.1% by mass sodium metaphosphate aqueous solution, ultrasonically dispersing the filler, and adjusting the concentration in such a way to obtain an appropriate amount of light for a sensitivity of the apparatus.

A material of the thermally conductive filler is not particularly limited as long as it has a higher thermal conductivity than a cured product of a thermosetting resin, and the material used as a filler for improving the thermal conductivity can be applied.

Specific examples of the thermally conductive filler include silica, alumina, aluminum nitride, boron nitride, silicon nitride, silicon carbide, and magnesium oxide. From the viewpoint of the thermal conductivity, alumina, aluminum nitride, and magnesium oxide are preferable, and alumina is more preferable. A crystal form of alumina is not particularly limited, and may be any of α-type, γ-type, δ-type and θ-type, and from the viewpoint of the high thermal conductivity, a high melting point, a high mechanical strength and an excellent electrical insulation, α-alumina is preferable.

A content ratio of the thermally conductive filler is preferably from 60% by volume to 80% by volume, based on a total solid content in the resin composition. When the thermally conductive filler is contained in the resin composition at 60% by volume or more, the thermal conductivity tends to be excellent. When the content ratio of the thermally conductive filler in the resin composition is 80% by volume or less, functions such as adhesiveness tend to appear. The content ratio of the thermally conductive filler in the resin composition is more preferably from 65% by volume to 80% by volume, and still more preferably from 70% by volume to 80% by volume, based on the total solid content.

The content ratio (% by volume) of the thermally conductive filler herein is a value obtained by the following formula.

$$\text{Content ratio (\% by volume) of thermally conductive filler} = (Aw/Ad) / ((Aw/Ad) + (Bw/Bd) + (Cw/Cd) + (Dw/Dd)) \times 100$$

Aw: mass composition ratio (% by mass) of thermally conductive filler

Bw: mass composition ratio (% by mass) of thermosetting resin
Cw: mass composition ratio of mica (% by mass)
Dw: mass composition ratio (% by mass) of other optional components (excluding organic solvent)
Ad: specific gravity of thermally conductive filler
Bd: specific gravity of thermosetting resin
Cd: specific gravity of mica
Dd: specific gravity of other optional components (excluding organic solvent)

Setting the content ratio of the thermally conductive filler to 70% by volume or more tends to be difficult to achieve with a filler group having a single peak in the frequency distribution from the viewpoint of a filling property of the filler. Therefore, preferably, two or more types of filler groups having different average particle diameters are combined and filled, and more preferably, at least three kinds of filler groups having different average particle diameters are combined.

For example, when a thermally conductive filler is constituted by a mixture of a thermally conductive filler (X) having an average particle diameter of from 10 μm to smaller than 100 μm, a thermally conductive filler (Y) having an average particle diameter of from 1.0 μm to smaller than 10 μm, and a thermally conductive filler (Z) having an average particle diameter of from 0.1 μm to smaller than 1.0 μm, regarding the mixing ratio of the filler groups, the ratio of the thermally conductive filler (X), the thermally conductive filler (Y), and the thermally conductive filler (Z) with regard to a total volume of the thermally conductive filler is respectively from 50% by volume to 90% by volume, from 1% by volume to 30% by volume and from 5% by volume to 40% by volume, and more preferably from 60% by volume to 80% by volume, 1% by volume to 10% by volume and 10% by volume to 30% by volume, respectively. The total % by volume of the thermally conductive filler (X), the thermally conductive filler (Y) and the thermally conductive filler (Z) is 100% by volume.

Here, in the present embodiment, the particle diameter (D50) at which the volume cumulative particle size distribution is 50% is defined as the "average particle diameter" of the thermally conductive filler. The volume cumulative particle size distribution is measured by the same method as described above.

When the resin composition in the present embodiment is applied to a resin sheet, a prepreg or a heat dissipator, an average particle diameter of the thermally conductive filler (X) is limited by a target thickness of the resin sheet or the like. Unless otherwise limited, from the viewpoint of a thermal conductivity, the average particle diameter of the thermally conductive filler (X) is preferably as large as possible. From the viewpoint of a thermal resistance, a thickness of the resin sheet or the like is preferably made as thin as possible within a range where an electrical degradation lifetime is allowed. Therefore, the average particle diameter of the thermally conductive filler (X) is preferably from 10 μm to 100 μm.

As described above, when thermally conductive fillers having different particle size distributions are combined and filled, the average particle diameter of the whole thermally conductive filler is preferably from 0.1 μm to 100 μm. However, a thermally conductive filler whose average particle diameter deviates from the range of from 0.1 μm to 100 μm may be used in combination within a range where the thermal conductivity and the electrical degradation lifetime are allowed. Even when the thermally conductive filler having an average particle diameter deviating from the range of from 0.1 μm to 100 μm is used in combination, a ratio of the filler group (C) in the thermally conductive filler, based on volume, needs to be larger than the ration of the filler group (B) in the thermally conductive filler, based on volume.

When the thermally conductive filler is contained in the resin composition in an amount of 60% by volume to 80% by volume based on the total solid content, and when the ratios of the filler group (A), the filler group (B), and the filler group (C) are respectively from 50% by volume to 90% by volume, from 1% by volume to 30% by volume, and from 5% by volume to 40% by volume, the thermal conductivity of the insulating material such as a resin sheet cured product obtained by curing a resin composition and the like is dramatically improved as compared with a resin alone, and tends to reach 8 W/(m·K) or more.

(Mica)

In the resin composition in the present embodiment, mica is preferably contained in the range of from 0.1% by volume to 5% by volume based on the total solid content. When the content ratio of mica falls within the above range, the electrical degradation lifetime of the insulating material tends to improve.

The mica used in the present embodiment (also referred to as isinglass in some cases) is preferably synthetic mica or natural mica.

Synthetic mica is not particularly limited, and examples thereof include swelling isinglass and non-swellable isinglass. When using synthetic mica, one in which the dispersibility in a resin is enhanced, if necessary, by surface treatment such as titanium coupling agent treatment, silane coupling agent treatment, or the like can be used. Mica with increased aspect ratio by intercalation with organic or inorganic material or mica with enhanced compatibility with thermosetting resin can also be used as synthetic mica. Specific examples of synthetic mica suitably include MICRO MICA, and SOMASIF manufactured by Co-op Chemical Co., Ltd.

For natural mica, for example, A-21S manufactured by YAMAGUCHI MICA CO., LTD. is suitable. As natural mica, one having enhanced affinity with a resin by surface treatment or intercalation, if necessary, can be used.

Mica used in the present embodiment preferably has an average particle diameter of from 1 μm to 10 μm.

The average particle diameter of mica can be measured by a laser diffraction scattering particle size distribution measuring apparatus (for example, LS13 manufactured by Beckman Coulter, Inc.) like the case of the thermally conductive filler. The particle diameter (D50) at which the volume cumulative particle size distribution is 50% is defined as the average particle diameter of mica.

In the present embodiment, when a specific amount of mica having an average particle diameter of from 1 μm to 10 μm is contained in a resin composition, mica in a resin cured product layer obtained by curing the resin composition tends to be aligned in an in-plane direction of the resin cured product layer. As a result, an effect of preventing or suppressing development of an electric tree generated with void, peeling or the like as a starting point when a voltage is applied between metal members sandwiching the resin cured product layer is obtained. As a result, the dielectric breakdown of the resin cured product layer can be prevented, and a time for dielectric breakdown can be lengthened.

Here, "dielectric breakdown" is defined as a state in which a generated electric tree reaches a facing electrode and an electrical short circuit has occurred between two electrodes sandwiching a resin cured product layer, and the time for dielectric breakdown of a resin cured product layer is defined as "electrical degradation lifetime". A voltage applied to a resin cured product layer is approximately from 100 V to 100 kV as an effective voltage, and includes at least one of direct current, alternating current or pulse wave. In any case, an effect of preventing dielectric breakdown and improving electrical degradation lifetime is obtained by an insulating material formed from a resin composition in the present embodiment.

The higher an aspect ratio of mica contained in the resin cured product layer, the more the dielectric breakdown is prevented, and the electrical degradation lifetime is more improved. The aspect ratio of mica is preferably from 5 to 500, more preferably from 10 to 500, and the aspect ratio is preferably as high as possible.

The aspect ratio of mica can be measured using a scanning electron microscope (SEM). A thickness of mica is measured from an SEM image and the aspect ratio is obtained by dividing the average particle diameter of the mica measured using a laser diffraction method by the thickness of the mica.

The thickness of mica is defined as an average value of thicknesses of 20 mica particles.

(Thermosetting Resin)

The resin composition in the present embodiment contains at least one thermosetting resin. The thermosetting resin is not particularly limited as long as it has a thermosetting property, and a commonly used thermosetting resin can be used.

Specific examples of the thermosetting resin include an epoxy resin, a polyimide resin, a polyamide imide resin, a triazine resin, a phenol resin, a melamine resin, a polyester resin, a cyanate ester resin, and modified products of these resins. These resins may be used singly, or two or more kinds thereof may be used in combination.

From the viewpoint of a heat resistance, the thermosetting resin in the present embodiment is preferably a resin selected from an epoxy resin, a phenol resin, and a triazine resin, and more preferably an epoxy resin.

When an epoxy resin is used as the thermosetting resin, one kind of epoxy resin may be used singly, or two or more kinds thereof may be used in combination.

Examples of the epoxy resin include polyglycidyl ether obtained by reacting polyhydric phenols such as bisphenol A, bisphenol F, biphenol, novolac-type phenol resin, orthocresol novolak-type phenol resin or triphenylmethane-type phenol resin, or polyhydric alcohols such as 1 ,4-butanediol with epichlorohydrin; a polyglycidyl ester obtained by reacting a polybasic acid such as phthalic acid or hexahydrophthalic acid with epichlorohydrin; *N*-glycidyl derivatives such as amines, amides, or compounds having a heterocyclic nitrogen base; and an alicyclic epoxy resin.

Among epoxy resins, an epoxy monomer having a mesogenic structure such as a biphenyl structure or a polymer thereof is preferable, since a thermal conductivity of a cured resin itself is improved and a melt viscosity at heating is reduced.

The mesogenic structure in the present embodiment refers to a molecular structure which makes it easy to express crystallinity or liquid crystallinity. Specific examples thereof include a biphenyl structure, a phenyl benzoate structure, a cyclohexyl benzoate structure, an azobenzene structure, a stilbene structure, and derivatives thereof.

Epoxy resins having a mesogenic structure in their molecular structure tend to form higher order structures when cured, and tend to achieve higher thermal conductivity when cured products are produced. Here, the higher order structure means a state in which its constituent elements are microscopically aligned, which corresponds, for example, to a crystal phase or a liquid crystal phase. Whether such a higher order structure exists or not can be easily judged by observation with a polarizingmicroscope. In other words, in an observation under the crossed Nicols state, when an

interference pattern due to depolarization is observed, it can be judged that a higher order structure exists.

As the epoxy monomer having a mesogenic structure, a biphenyl-type epoxy resin, a bixylenyl-type epoxy resin, 1-(3-methyl-4-oxiranylmethoxyphenyl)-4-(4-oxiranylmethoxyphenyl)-1-cyclohexene, 1-(3-methyl-4-oxiranylmethoxyphenyl)-4-(4-oxiranylmethoxyphenyl)-benzene, and trans-4-{4-(2,3-epoxypropoxy)phenyl}cyclohexyl=4-(2,3-epoxypropoxy)benzoate is preferable, and 1-(3-methyl-4-oxiranylmethoxyphenyl)-4-(4-oxiranylmethoxyphenyl)-1-cyclohexene, a biphenyl-type epoxy resin, and trans-4-{4-(2,3-epoxypropoxy)phenyl}cyclohexyl=4-(2,3-epoxypropoxy) benzoate is more preferable from the viewpoint of a melting point and a thermal conductivity of a cured product.

The epoxy resin may be an epoxy monomer or a prepolymer obtained by polymerizing an epoxy monomer with a curing agent or the like and partially reacting the epoxy monomer. Resins having a mesogenic structure are generally easy to crystallize and are low in solubility in solvents in many cases. However, since crystallization can be suppressed by polymerizing a part of an epoxy monomer, a moldability may be improved.

A content ratio of the thermosetting resin is preferably from 9% by volume to 40% by volume, and more preferably from 20% by volume to 40% by volume with regard to the total solid content of the resin composition. When a curing agent, a curing accelerator or the like to be described below is used in combination, the content ratio of the thermosetting resin referred to herein includes the content ratio of the curing agent, the curing accelerator or the like.

(Curing Agent and Curing Accelerator)

A resin composition in the present embodiment may contain at least one of a curing agent and a curing accelerator for curing a thermosetting resin, if necessary.

When the resin composition in the present embodiment contains a curing agent, the curing agent used in the present embodiment may be appropriately selected from conventionally known compounds depending on type or the like of a thermosetting resin.

Examples of the curing agent when an epoxy resin is used as the thermosetting resin include an amine-type curing agent and a phenol-type curing agent. As the amine-type curing agent, an aromatic polyvalent amine is preferable, and examples thereof include 4,4'-diaminodiphenylmethane and 1,5-diaminonaphthalene. As the phenolic curing agent, a polyfunctional phenol is preferable, and examples thereof include a phenol novolak resin, a phenol aralkyl resin, a naphthol aralkyl resin, a dicyclopentadiene modified phenol resin, a catechol novolac resin, and a resorcinol novolac resin. The curing agent may be used singly, or two or more kinds thereof may be used in combination.

When the resin composition in the present embodiment contains a curing agent and an epoxy resin is used as the thermosetting resin, a content ratio of the curing agent is preferably as close as possible to a mixing ratio (equivalent ratio of 1.0) at which reactive functional groups of the epoxy resin as the main component and the curing agent are completely consumed upon curing, and the content ratio is preferably from 0.8 to 1.2, and more preferably from 0.9 to 1.1.

In the present embodiment, when a resin composition in the present embodiment contains a curing agent, a curing accelerator may be included for the purpose of promoting a reaction or the like between the thermosetting resin and the curing agent. Type and amount of the curing accelerator are not particularly limited, and appropriate ones can be selected from the viewpoints of reaction rate, reaction temperature, storability, and the like. Specific examples of the curing accelerator include imidazole compounds, organic phosphorus compounds, tertiary amines, and quaternary ammonium salts. These may be used singly, or two or more thereof may be used in combination.

(Other Components)

The resin composition in the present embodiment may contain other components if necessary.

The resin composition in the present embodiment preferably contains a silane coupling agent. The inclusion of the silane coupling agent has an effect of forming a covalent bond between the surface of a thermally conductive filler and an organic resin therearound, which is ,in other words, a role of a binder agent, an effect of contributing to the function of efficiently transmitting heat, and further, an effect of contributing to an improvement in insulation reliability by preventing entry of moisture.

Commercially available silane coupling agents can be usually used, and considering compatibility with a thermosetting resin and reduction in thermal conduction defect at the interface between the thermosetting resin and a thermally conductive filler, a silane coupling agent having an epoxy group, an amino group, a mercapto group, a ureido group, or a hydroxyl group at the terminal is preferably used.

Specific examples of the silane coupling agent include 3-glycidoxypropyltrimethoxysilane, 3-glycidoxypropyltriethoxysilane, 3-glycidoxypropylmethyldiethoxysilane, 3-glycidoxypropylmethyldimethoxysilane, 2-(3,4-epoxycyclohexyl) ethyltrimethoxysilane, 3-aminopropyltriethoxysilane, 3-(2-aminoethyl) aminopropyltrimethoxysilane, 3-aminopropyltrimethoxysilane, 3-phenylaminopropyltrimethoxysilane, 3-mercaptopropyltrimethoxysilane, 3-mercaptopropyltriethoxysilane, *N*-phenyl-3-aminopropyltrimethoxysilane, and 3-ureidopropyltriethoxysilane. A silane coupling agent oligomer such as SC-6000KS2 (manufactured by Hitachi Chemical Techno Service Co., Ltd.) can also be used. These

silane coupling agents may be used singly, or two or more kinds thereof may be used in combination.

The resin composition in the present embodiment may contain an organic solvent in accordance with a molding process. Examples of the organic solvent include organic solvents commonly used in resin compositions.

Specific examples of the organic solvent used in the present embodiment include an alcohol solvent, an ether solvent, a ketone solvent, an amide solvent, an aromatic hydrocarbon solvent, an ester solvent, and a nitrile solvent. As the organic solvent, for example, methyl isobutyl ketone, dimethyl acetamide, dimethyl formamide, dimethyl sulfoxide, N-methyl-2-pyrrolidone, γ-butyrolactone, sulfolane, cyclohexanone, and methyl ethyl ketone can be used. These may be used singly or as a mixed solvent in which two or more kind thereof are used in combination.

< Resin Sheet >

A resin sheet in the present embodiment is formed by molding a resin composition in the present embodiment into a sheet shape. A resin sheet in the present embodiment can be manufactured, for example, by applying a resin composition in the present embodiment onto a release substrate and drying. After drying, a pinhole or the like occured by coating is eliminated by hot pressing and smoothing both sides by, if necessary, facing two resin sheets in the present embodiment or applying a release substrate to the resin sheet. By molding a resin sheet from the resin composition in the present embodiment, excellent electrical degradation lifetime is realized while maintaining high thermal conductivity.

The release substrate is not particularly limited as long as it can withstand the temperature during drying, and a generally used resin film such as a polyethylene terephthalate film, a polyimide film, or an aramid film with a releasing agent, or metal foil such as an aluminum foil with a releasing agent can be used.

An average thickness of the resin sheet is not particularly limited, and can be appropriately selected according to the purpose. For example, the average thickness of the resin sheet is preferably from 100 μm to 500 μm, and more preferably from 100 μm to 300 μm. The average thickness of the resin sheet is obtained as an arithmetic average value of the thicknesses at 5 points measured using a micrometer.

The above resin sheet can be obtained, for example, as follows. First, a varnish containing the resin composition in the present embodiment is prepared by mixing, dissolving, and dispersing the respective components described in the section of the resin composition described above. Then, the prepared varnish is applied onto a release substrate. The application of the varnish can be carried out by a known method. Specific examples of the varnish application method include a comma coating method, a die coating method, a lip coating method, and a gravure coating method. As a method of applying a resin sheet to a predetermined thickness, a comma coating method in which an object to be coated passes between gaps, a die coating method in which a varnish adjusted in flow rate is applied from a nozzle, or the like can be applied.

A drying temperature is desirably appropriately set depending on the solvent used in the resin composition, and is generally about from 80°C to 180°C. A drying time can be determined by the balance between a gelation time of the varnish and the thickness of the resin sheet, and is not particularly limited. After drying, the release substrate is removed, and a resin sheet is obtained.

A residual amount of the solvent in the resin sheet is preferably 2.0% by mass or less from the viewpoint of concern about formation of bubbles due to generation of outgas during curing.

The residual amount of the solvent in the resin sheet is obtained from mass change before and after drying, in which the resin sheet is cut into 40 mm square and dried in a constant temperature bath preheated to 190°C for 2 hours.

A resin sheet in the present embodiment may be used after flattening the surface in advance by laminating or attaching by hot pressing with a press, a roll laminator, or the like. As a method of hot pressing, any of methods such as hot press, hot roll, and laminator can be selected.

In the case of hot pressing by a vacuum pressing method, a heating temperature is desirably appropriately set in accordance with the type or the like of a resin used in the resin composition, and is generally preferably from 60°C to 180°C, and more preferably from 120°C to 150°C. A degree of vacuum is preferably from 3 Pa to 0.1 kPa. A pressing pressure is preferably from 0.5 MPa to 4 MPa, and more preferably from 1 MPa to 2 MPa.

< Prepreg >

A prepreg in the present embodiment is configured to include a fiber substrate and a resin composition in the present embodiment impregnated in the fiber substrate. With such a configuration, a prepreg having excellent electrical degradation lifetime while maintaining high thermal conductivity is obtained.

The fiber substrate in the prepreg is not particularly limited as long as it is used for manufacturing a metal foil-clad laminate, a multilayer printed wiring board or the like, and a fiber substrate such as a woven fabric or a nonwoven fabric is used. It is noted that, in the case of a fiber with extremely small meshes, a filler may clog the fiber, and the fiber may not be impregnated with a resin composition, and therefore, the mesh opening is preferably 5 times or more the average particle diameter of a thermally conductive filler. Examples of material of the fiber substrate include inorganic

fibers such as glass, alumina, boron, silica alumina glass, silica glass, tyranno, silicon carbide, silicon nitride, carbon and zirconia; organic fibers such as aramid, polyether ether ketone, polyether imide, polyethersulfone, and cellulose; and mixed fibers thereof. Among them, a woven fabric of glass fiber is preferably used. By using such a fiber substrate, a prepreg which is flexible and capable of being arbitrarily folded can be obtained. Further, dimensional changes of a substrate due to temperature, moisture absorption or the like in a manufacturing process can be reduced.

A thickness of the fiber substrate is not particularly limited, and from the viewpoint of imparting better flexibility, it is preferably 30 μm or less, and more preferably 15 μm or less from the viewpoint of impregnating property. A lower limit of the thickness of the fiber substrate is not particularly limited, and is usually about 5 μm.

In the prepreg in the present embodiment, the impregnation rate of the resin composition is preferably from 50% by mass to 99.9% by mass with respect to a total mass of the fiber substrate and the resin composition.

The prepreg in the present embodiment can be produced by impregnating the fiber substrate with a varnish of the resin composition in the present embodiment prepared in the same manner as described above and removing the solvent by heating at 80°C to 180°C. A residual amount of the solvent in the prepreg is preferably 2.0% by mass or less, more preferably 1.0% by mass or less, and still more preferably 0.7% by mass or less.

The residual amount of the solvent in the prepreg is determined from change in mass before and after drying when the prepreg is cut into a size of 40 mm square and dried in a constant temperature bath preheated to 190°C for 2 hours.

A drying time for removing the solvent by heating is not particularly limited. A method of impregnating the fiber substrate with the resin composition is not particularly limited, and examples thereof include a method of coating with a coating machine. Specific examples of the method include a vertical coating method in which the fiber substrate is passed through the resin composition and pulled up, and a horizontal coating method in which a resin composition is coated on a supporting film and then a fiber substrate is pressed on the film to be impregnated, and from the viewpoint of suppressing the uneven distribution of the thermally conductive filler in the fiber substrate, a horizontal coating method is suitable.

The prepreg in the present embodiment may be used after smoothening a surface in advance by laminating or applying by hot pressing with a press, a roll laminator, or the like. A method of hot pressing is the same as the method mentioned for the resin sheet. Conditions of heating temperature, degree of vacuum, and pressing pressure in the hot pressing of the prepreg are also the same as the conditions mentioned for the hot pressing of the resin sheet.

## < Insulator >

The insulator in the present embodiment includes a cured product of the resin composition in the present embodiment. The insulator in the present embodiment can be manufactured by the same manufacturing method as in the case of using a resin for usual cast insulation. Specifically, the insulator in the present embodiment can be obtained by a method of injecting the resin composition in the present embodiment into a mold or the like. By using the resin composition in the present embodiment, an insulator having a high insulation withstand voltage as compared with an epoxy resin used as a resin for a conventional cast insulator can be obtained. Examples of such insulators include insulation spacers, insulation rods, and molded insulation components.

## < Resin Sheet Cured Product >

The resin sheet cured product in the present embodiment is a heat-treated product of the resin sheet in the present embodiment. The curing method of curing the resin sheet in the present embodiment can be appropriately selected according to constituents of the resin composition constituting a resin sheet, the purpose of the resin sheet cured product, and the like. A curing method of curing the resin sheet is preferably a heating and pressing treatment. The heating and pressing treatment conditions are preferably such that a heating temperature is from 80°C to 250°C, and a pressure is from 0.5 MPa to 8 MPa, and are more preferably such that the heating temperature is from 130°C to 230°C, and the pressure is from 1.5 MPa to 5 MPa.

A treatment time for heating and pressing treatment can be appropriately selected depending on the heating temperature and the like. For example, the treatment time can be from 2 hours to 8 hours, and preferably from 4 hours to 6 hours.

The heating and pressing treatment may be performed once, or may be performed twice or more by changing the heating temperature or the like.

## < Heat dissipator >

The heat dissipator in the present embodiment includes: a first metal member; a second metal member; and a resin cured product layer which is a cured product of the resin composition in the present embodiment, disposed

between the first metal member and the second metal member.

Here, the term "metal member" means a forming product including a metal material that can function as a heat dissipator, such as a metal foil, a substrate, or a fin. In the present embodiment, the member is preferably a substrate composed of a variety of metals such as Al (aluminum) and Cu (copper).

An example of the heat dissipator in the present embodiment is illustrated in Fig. 1. The heat dissipator in the present embodiment is not limited thereto. Sizes of the members in Fig. 1 are conceptual, and a relative relationship between sizes of the members is not limited thereto.

In Fig. 1, a resin cured product layer 10 is disposed between a first metal member 20 made of, for example, Al (aluminum) and a second metal member 30 made of, for example, Cu (copper), one side of the layer 10 is adhered to the surface of the metal member 20, and the other side of the layer 10 is adhered to the surface of the metal member 30.

Since the resin cured product layer 10 has a high insulation withstand voltage, even when, for example, a large potential difference occurs between the first metal member 20 and the second metal member 30, insulation between the first metal member 20 and the second metal member 30 can be secured.

An average thickness of the resin cured product layer 10 is not particularly limited, and is preferably, for example, from 100 μm to 300 μm.

Examples

The present invention will be described by way of Examples and Comparative Examples, but the present invention is not limited to the following Examples.

(Example 1)

< Production of Resin Composition >

100 parts by mass of a cyclohexyl benzoate-type epoxy resin having the following structure (trans-4-{4-(2,3-epoxypropoxy)phenyl}cyclohexyl=4-(2,3-epoxypropoxy)benzoate, see Japanese Patent No. 5471975, epoxy equivalent: 212 g/eq.) as a thermosetting resin, 37 parts by mass of a resorcinol novolac resin (hydroxyl group equivalent: 62 g/eq., manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 1,380 parts by mass of alumina powder (a-alumina powder manufactured by Sumitomo Chemical Co., Ltd.; 1,000 parts by mass of alumina (a thermally conductive filler (X)) having an average particle diameter of 18 μm, 80 parts by mass of alumina (a thermally conductive filler (Y)) having an average particle diameter of 3 μm, and 300 parts by mass of alumina (a thermally conductive filler (Z)) having an average particle diameter of 0.4 μm) as a thermally conductive filler, 1.5 parts by mass of synthetic mica powder (trade name: SOMASIF, average particle diameter: 5 μm, manufactured by Co-op Chemical Co., Ltd.), and 300 parts by mass of methyl ethyl ketone as a solvent were mixed to obtain an epoxy resin varnish.

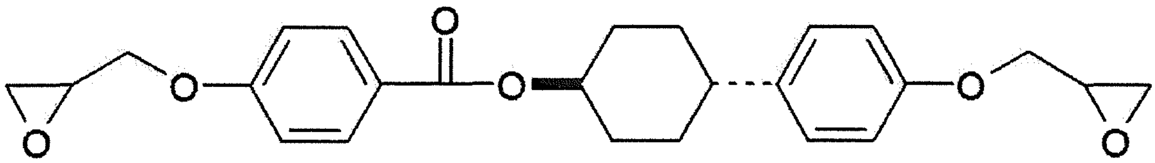

A ratio of the alumina powder to a total volume of the cyclohexyl benzoate-type epoxy resin, the resorcinol novolac resin, the alumina powder, and the synthetic mica powder was calculated with a density of a mixture of a cyclohexyl benzoate-type epoxy resin and a resorcinol novolac resin being 1.2 g/cm$^3$, the density of the alumina powder being 3.98 g/cm$^3$, and the density of the synthetic mica powder being 2.8 g/cm$^3$, and the ratio was 75.2% by volume. A ratio of the synthetic mica powder to the total volume was calculated, and the ratio was 0.1% by volume. When a total volume of alumina was 100% by volume, a ratio of the filler group (A) was 72.5% by volume, a ratio of the filler group (B) was 9.5% by volume, and a ratio of the filler group (C) was 18.0% by volume.

< Production of Resin Sheet Cured Product >

The obtained resin composition was applied on a release surface of a polyethylene terephthalate film (75E-0010CTR-4, manufactured by Fujimori Kogyo Co., Ltd., hereinafter sometimes referred to as "PET film") with an applicator so as to have a thickness of about 200 μm and dried in a box-type oven at 100°C for 10 minutes to form a composite

sheet in a state of A-stage on the PET film.

On the roughened surface of a copper foil (5 cm × 5 cm, GTS foil manufactured by Furukawa Electric Co., Ltd.) having a thickness of 85 μm, a composite sheet (A stage, 5 cm × 5 cm) obtained by the above method was aligned and overlapped in such a manner that the copper foil and the composite sheet overlap with each other, and then the PET film was peeled off. Further, a copper foil was layered on the side from which the PET film was peeled off to obtain a laminated body. The obtained laminated body was pressed by a high temperature vacuum press under conditions of a temperature of 180°C, a degree of vacuum of 1 kPa or less, a pressure of 60 MPa, and a time of 10 minutes, to obtain a resin sheet having copper foils on both sides. The pressed resin sheet was placed in an oven and subjected to step curing at 160°C for 30 minutes and then at 190°C for 2 hours to obtain a resin sheet cured product having copper foil on both sides. From the obtained resin sheet cured product having copper foil on both sides, the copper foil was etched away with a sodium persulfate solution to obtain a resin sheet cured product. The average thickness of the obtained resin sheet cured product was 200 μm. An average thickness of the resin sheet cured product was determined as an arithmetic average value of the thicknesses of five points measured with a micrometer.

< Evaluation of Electrical Degradation Lifetime >

The obtained resin sheet cured product was evaluated for electrical degradation lifetime using a V-t test apparatus (manufactured by Kyonan Electric Co., Ltd.). In the test, a sample was immersed in a container containing silicone oil (Shin-Etsu Chemical Co., Ltd., KF-96-50cs). Voltage was set at 5 kVrms, 50 Hz, and a time from voltage application to dielectric breakdown was measured. Table 1 lists the measurement results.

< Measurement of Thermal Conductivity >

For the obtained resin sheet cured product, the thermal resistance value of the resin sheet cured product was measured using a thermal resistance evaluation device (YST-901S) manufactured by Yamayo Tester Co., Ltd. The thermal conductivity (W/(m·K)) was calculated by inverse calculation of the obtained thermal resistance value. Table 1 lists the measurement results.

(Example 2)

100 parts by mass of the same cyclohexyl benzoate-type epoxy resin as in Example 1 as a thermosetting resin, 37 parts by mass of a resorcinol novolac resin (hydroxyl group equivalent: 62 g/eq., manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 1,380 parts by mass of alumina powder (a-alumina powder manufactured by Sumitomo Chemical Co., Ltd.; 1,000 parts by mass of alumina (a thermally conductive filler (X)) having an average particle diameter of 18 μm, 80 parts by mass of alumina (a thermally conductive filler (Y)) having an average particle diameter of 3 μm, and 300 parts by mass of alumina (a thermally conductive filler (Z)) having an average particle diameter of 0.4 μm) as a thermally conductive filler, 17 parts by mass of synthetic mica powder (trade name: SOMASIF, average particle diameter: 5 μm, manufactured by Co-op Chemical Co., Ltd.), and 300 parts by mass of methyl ethyl ketone as a solvent were mixed to obtain an epoxy resin varnish.

A ratio of the alumina powder to a total volume of the cyclohexyl benzoate-type epoxy resin, the resorcinol novolac resin, the alumina powder, and the synthetic mica powder was calculated with a density of a mixture of a cyclohexyl benzoate-type epoxy resin and a resorcinol novolac resin being 1.2 g/cm$^3$, the density of the alumina powder being 3.98 g/cm$^3$, and the density of the synthetic mica powder being 2.8 g/cm$^3$, and the ratio was 74.2% by volume. A ratio of the synthetic mica powder to the total volume was calculated, and the ratio was 1.3% by volume. When a total volume of alumina was 100% by volume, a ratio of the filler group (A) was 72.5% by volume, a ratio of the filler group (B) was 9.5% by volume, and a ratio of the filler group (C) was 18.0% by volume.

Subsequently, a resin sheet cured product was prepared in the same manner as in Example 1. Evaluation results of electrical degradation lifetime and measurement results of thermal conductivity of the obtained resin sheet cured product are listed in Table 1.

(Example 3)

100 parts by mass of the same cyclohexyl benzoate-type epoxy resin as in Example 1 as a thermosetting resin, 37 parts by mass of a resorcinol novolac resin (hydroxyl group equivalent: 62 g/eq., manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 1,380 parts by mass of alumina powder (α-alumina powder manufactured by Sumitomo Chemical Co., Ltd.; 1,000 parts by mass of alumina (a thermally

conductive filler (X)) having an average particle diameter of 18 μm, 80 parts by mass of alumina (a thermally conductive filler (Y)) having an average particle diameter of 3 μm, and 300 parts by mass of alumina (a thermally conductive filler (Z)) having an average particle diameter of 0.4 μm) as a thermally conductive filler, 70 parts by mass of synthetic mica powder (trade name: SOMASIF, average particle diameter: 5 μm, manufactured by Co-op Chemical Co., Ltd.), and 300 parts by mass of methyl ethyl ketone as a solvent were mixed to obtain an epoxy resin varnish.

A ratio of the alumina powder to a total volume of the cyclohexyl benzoate-type epoxy resin, the resorcinol novolac resin, the alumina powder, and the synthetic mica powder was calculated with a density of a mixture of a cyclohexyl benzoate-type epoxy resin and a resorcinol novolac resin being 1.2 g/cm$^3$, the density of the alumina powder being 3.98 g/cm$^3$, and the density of the synthetic mica powder being 2.8 g/cm$^3$, and the ratio was 71.3% by volume. A ratio of the synthetic mica powder to the total volume was calculated, and the ratio was 5.2% by volume. When a total volume of alumina was 100% by volume, the ratio of the filler group (A) was 72.5% by volume, a ratio of the filler group (B) was 9.5% by volume, and a ratio of the filler group (C) was 18.0% by volume.

Subsequently, a resin sheet cured product was prepared in the same manner as in Example 1. Evaluation results of electrical degradation lifetime and measurement results of thermal conductivity of the obtained resin sheet cured product are listed in Table 1.

(Example 4)

An epoxy resin varnish was prepared in the same manner as in Example 1 except that a biphenyl-type epoxy resin (YL6121H manufactured by Mitsubishi Chemical Corporation) was used in place of the cyclohexyl benzoate-type epoxy resin to prepare a resin sheet cured product. Evaluation results of electrical degradation lifetime and measurement results of thermal conductivity of the obtained resin sheet cured product are listed in Table 1. A density of a mixture of the biphenyl type epoxy resin (YL6121 H manufactured by Mitsubishi Chemical Corporation, Ltd.) and the resorcinol novolac resin was set to 1.2 g/cm$^3$. The density of the mixture was set in the same manner for Examples 5 and 6.

(Example 5)

An epoxy resin varnish was prepared in the same manner as in Example 2 except that a biphenyl-type epoxy resin (YL6121H manufactured by Mitsubishi Chemical Corporation) was used in place of the cyclohexyl benzoate-type epoxy resin to prepare a resin sheet cured product. Evaluation results of electrical degradation lifetime and measurement results of thermal conductivity of the obtained resin sheet cured product are listed in Table 1.

(Example 6)

An epoxy resin varnish was prepared in the same manner as in Example 3 except that a biphenyl-type epoxy resin (YL6121H manufactured by Mitsubishi Chemical Corporation) was used in place of the cyclohexyl benzoate-type epoxy resin to prepare a resin sheet cured product. Evaluation results of electrical degradation lifetime and measurement results of thermal conductivity of the obtained resin sheet cured product are listed in Table 1.

(Example 7)

An epoxy resin varnish was prepared in the same manner as in Example 1 except that a triphenylmethane-type epoxy resin (EPPN-502H manufactured by Nippon Kayaku Co., Ltd., 6-membered ring structures in the structure is 3 or more) was used in place of the cyclohexyl benzoate-type epoxy resin to prepare a resin sheet cured product. Evaluation results of electrical degradation lifetime and measurement results of thermal conductivity of the obtained resin sheet cured product are listed in Table 1. A density of a mixture of the triphenylmethane-type epoxy resin (EPPN-502H manufactured by Nippon Kayaku Co., Ltd.) and the resorcinol novolac resin was set to 1.2 g/cm$^3$. The density of the mixture was set in the same manner for Examples 8 and 9.

(Example 8)

An epoxy resin varnish was prepared in the same manner as in Example 2 except that a triphenylmethane-type epoxy resin (EPPN-502H manufactured by Nippon Kayaku Co., Ltd.) was used in place of the cyclohexyl benzoate-type epoxy resin to prepare a resin sheet cured product. Evaluation results of electrical degradation lifetime and measurement results of thermal conductivity of the obtained resin sheet cured product are listed in Table 1.

(Example 9)

An epoxy resin varnish was prepared in the same manner as in Example 3 except that a triphenylmethane-type epoxy resin (EPPN-502H manufactured by Nippon Kayaku Co., Ltd.) was used in place of the cyclohexyl benzoate-type epoxy resin to prepare a resin sheet cured product. Evaluation results of electrical degradation lifetime and measurement results of thermal conductivity of the obtained resin sheet cured product are listed in Table 1.

(Comparative Example 1)

100 parts by mass of a triphenylmethane-type epoxy resin (EPPN-502H manufactured by Nippon Kayaku Co., Ltd.) as a thermosetting resin, 37 parts by mass of a resorcinol novolac resin (hydroxyl group equivalent: 62 g/eq., manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 1,380 parts by mass of alumina powder ($\alpha$-alumina powder manufactured by Sumitomo Chemical Co., Ltd.; 1,000 parts by mass of alumina (a thermally conductive filler (X)) having an average particle diameter of 18 $\mu$m, 80 parts by mass of alumina (a thermally conductive filler (Y)) having an average particle diameter of 3 $\mu$m, and 300 parts by mass of alumina (a thermally conductive filler (Z)) having an average particle diameter of 0.4 $\mu$m) as a thermally conductive filler, and 300 parts by mass of methyl ethyl ketone as a solvent were mixed to obtain an epoxy resin varnish.

A ratio of the alumina powder to a total volume of the triphenylmethane-type epoxy resin (EPPN-502H manufactured by Nippon Kayaku Co., Ltd.), the resorcinol novolac resin, and the alumina powder was calculated with a density of a mixture of the triphenylmethane-type epoxy resin (EPPN-502H manufactured by Nippon Kayaku Co., Ltd.) and a resorcinol novolac resin being 1.2 g/cm$^3$, and the density of the alumina powder being 3.98 g/cm$^3$, and the ratio was 75.1% by volume. A ratio of the synthetic mica powder to the total volume was 0% by volume. When a total volume of alumina was 100% by volume, a ratio of the filler group (A) was 72.5% by volume, a ratio of the filler group (B) was 9.5% by volume, and a ratio of the filler group (C) was 18.0% by volume.

Subsequently, a resin sheet cured product was prepared in the same manner as in Example 1. Evaluation results of electrical degradation lifetime and measurement results of thermal conductivity of the obtained resin sheet cured product are listed in Table 1.

(Example 10)

100 parts by mass of a triphenylmethane-type epoxy resin (EPPN-502H manufactured by Nippon Kayaku Co., Ltd.) as a thermosetting resin, 37 parts by mass of a resorcinol novolac resin (hydroxyl group equivalent: 62 g/eq., manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 2,000 parts by mass of alumina powder (a-alumina powder manufactured by Sumitomo Chemical Co., Ltd.; 1,300 parts by mass of alumina (a thermally conductive filler (X)) having an average particle diameter of 18 $\mu$m, 200 parts by mass of alumina (a thermally conductive filler (Y)) having an average particle diameter of 3 $\mu$m, and 500 parts by mass of alumina (a thermally conductive filler (Z)) having an average particle diameter of 0.4 $\mu$m) as a thermally conductive filler, 200 parts by mass of synthetic mica powder (trade name: SOMASIF, average particle diameter: 5 $\mu$m, manufactured by Co-op Chemical Co., Ltd.), and 300 parts by mass of methyl ethyl ketone as a solvent were mixed to obtain an epoxy resin varnish.

A ratio of the alumina powder to a total volume of the triphenylmethane-type epoxy resin (EPPN-502H manufactured by Nippon Kayaku Co., Ltd.), the resorcinol novolac resin, the alumina powder, and the synthetic mica powder was calculated with a density of a mixture of a triphenylmethane-type epoxy resin (EPPN-502H manufactured by Nippon Kayaku Co., Ltd.) and a resorcinol novolac resin being 1.2 g/cm$^3$, the density of the alumina powder being 3.98 g/cm$^3$, and the density of the synthetic mica powder being 2.8 g/cm$^3$, and the ratio was 73.1 % by volume. A ratio of the synthetic mica powder to the total volume was calculated, and the ratio was 10.4% by volume. When a total volume of alumina was 100% by volume, a ratio of the filler group (A) was 65.0% by volume, a ratio of the filler group (B) was 14.2% by volume, and a ratio of the filler group (C) was 20.8% by volume.

Subsequently, a resin sheet cured product was prepared in the same manner as in Example 1. Evaluation results of electrical degradation lifetime and measurement results of thermal conductivity of the obtained resin sheet cured product are listed in Table 1.

(Comparative Example 2)

100 parts by mass of a triphenylmethane-type epoxy resin (EPPN-502H manufactured by Nippon Kayaku Co., Ltd.) as a thermosetting resin, 37 parts by mass of a resorcinol novolac resin (hydroxyl group equivalent: 62 g/eq.,

manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 1,370 parts by mass of alumina powder (a-alumina powder manufactured by Sumitomo Chemical Co., Ltd.; 960 parts by mass of alumina (a thermally conductive filler (X)) having an average particle diameter of 18 μm, 260 parts by mass of alumina (a thermally conductive filler (Y)) having an average particle diameter of 3 μm, and 150 parts by mass of alumina (a thermally conductive filler (Z)) having an average particle diameter of 0.4 μm) as a thermally conductive filler, 17 parts by mass of synthetic mica powder (trade name: SOMASIF, average particle diameter: 5 μm, manufactured by Co-op Chemical Co., Ltd.), and 300 parts by mass of methyl ethyl ketone as a solvent were mixed to obtain an epoxy resin varnish.

A ratio of the alumina powder to a total volume of the triphenylmethane-type epoxy resin (EPPN-502H manufactured by Nippon Kayaku Co., Ltd.), the resorcinol novolac resin, the alumina powder, and the synthetic mica powder was calculated with a density of a mixture of a triphenylmethane-type epoxy resin (EPPN-502H manufactured by Nippon Kayaku Co., Ltd.) and a resorcinol novolac resin being 1.2 $g/cm^3$, the density of the alumina powder being 3.98 $g/cm^3$, and the density of the synthetic mica powder being 2.8 $g/cm^3$, and the ratio was 74.1 % by volume. A ratio of the synthetic mica powder to the total volume was calculated, and the ratio was 1.3% by volume. When a total volume of alumina was 100% by volume, a ratio of the filler group (A) was 70.1% by volume, a ratio of the filler group (B) was 20.8% by volume, and a ratio of the filler group (C) was 9.1% by volume.

Subsequently, a resin sheet cured product was prepared in the same manner as in Example 1. Evaluation results of electrical degradation lifetime and measurement results of thermal conductivity of the obtained resin sheet cured product are listed in Table 1.

(Comparative Example 3)

100 parts by mass of a triphenylmethane-type epoxy resin (EPPN-502H manufactured by Nippon Kayaku Co., Ltd.) as a thermosetting resin, 37 parts by mass of a resorcinol novolac resin (hydroxyl group equivalent: 62 g/eq., manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 1,370 parts by mass of alumina powder (a-alumina powder manufactured by Sumitomo Chemical Co., Ltd.; 300 parts by mass of alumina (a thermally conductive filler (X)) having an average particle diameter of 18 μm, 490 parts by mass of alumina (a thermally conductive filler (Y)) having an average particle diameter of 3 μm, and 580 parts by mass of alumina (a thermally conductive filler (Z)) having an average particle diameter of 0.4 μm) as a thermally conductive filler, 17 parts by mass of synthetic mica powder (trade name: SOMASIF, average particle diameter: 5 μm, manufactured by Co-op Chemical Co., Ltd.), and 300 parts by mass of methyl ethyl ketone as a solvent were mixed to obtain an epoxy resin varnish.

A ratio of the alumina powder to the total volume of the triphenylmethane-type epoxy resin (EPPN-502H manufactured by Nippon Kayaku Co., Ltd.), the resorcinol novolac resin, the alumina powder, and the synthetic mica powder was calculated with the density of a mixture of a triphenylmethane-type epoxy resin (EPPN-502H manufactured by Nippon Kayaku Co., Ltd.) and a resorcinol novolac resin being 1.2 $g/cm^3$, the density of the alumina powder being 3.98 $g/cm^3$, and a density of the synthetic mica powder being 2.8 $g/cm^3$, and the ratio was 74.1 % by volume. A ratio of the synthetic mica powder to the total volume was calculated, and the ratio was 1.3% by volume. When a total volume of alumina was 100% by volume, a ratio of the filler group (A) was 21.9% by volume, a ratio of the filler group (B) was 42.9% by volume, and a ratio of the filler group (C) was 35.2% by volume.

Subsequently, a resin sheet cured product was prepared in the same manner as in Example 1. Evaluation results of electrical degradation lifetime and measurement results of thermal conductivity of the obtained resin sheet cured product are listed in Table 1.

(Example 11)

100 parts by mass of a triphenylmethane-type epoxy resin (EPPN-502H manufactured by Nippon Kayaku Co., Ltd.) as a thermosetting resin, 37 parts by mass of a resorcinol novolac resin (hydroxyl group equivalent: 62 g/eq., manufactured by Hitachi Chemical Company, Ltd.) as a curing agent, 1.4 parts by mass of triphenylphosphine as a curing accelerator, 1.4 parts by mass of KBM-573 (manufactured by Shin-Etsu Chemical Co., Ltd.) as a silane coupling agent, 1,370 parts by mass of alumina powder (α-alumina powder manufactured by Sumitomo Chemical Co., Ltd.; 1,300 parts by mass of alumina (a thermally conductive filler (X)) having an average particle diameter of 18 μm, 10 parts by mass of alumina (a thermally conductive filler (Y)) having an average particle diameter of 3 μm, and 60 parts by mass of alumina (a thermally conductive filler (Z)) having an average particle diameter of 0.4 μm) as a thermally conductive filler, 17 parts by mass of synthetic mica powder (trade name: SOMASIF, average particle diameter: 5 μm, manufactured by Co-op Chemical Co., Ltd.), and 300 parts by mass of methyl ethyl ketone as a solvent were mixed to obtain an epoxy

resin varnish.

A ratio of the alumina powder to a total volume of the triphenylmethane-type epoxy resin (EPPN-502H manufactured by Nippon Kayaku Co., Ltd.), the resorcinol novolac resin, the alumina powder, and the synthetic mica powder was calculated with the density of a mixture of a triphenylmethane-type epoxy resin (EPPN-502H manufactured by Nippon Kayaku Co., Ltd.) and a resorcinol novolac resin being 1.2 g/$cm^3$, the density of the alumina powder being 3.98 g/$cm^3$, and a density of the synthetic mica powder being 2.8 g/$cm^3$, and the ratio was 74.1 % by volume. The ratio of the synthetic mica powder to the total volume was calculated, and the ratio was 1.3% by volume. When a total volume of alumina was 100% by volume, a ratio of the filler group (A) was 94.9% by volume, a ratio of the filler group (B) was 1.4% by volume, and a ratio of the filler group (C) was 3.7% by volume.

A resin sheet cured product was prepared in the same manner as in Example 1. Evaluation results of electrical degradation lifetime and measurement results of thermal conductivity of the obtained resin sheet cured product are listed in Table 1.

(Example 12)

An epoxy resin varnish was prepared in the same manner as in Example 9 except that synthetic mica powder having an average particle diameter of 1 μm collected by classifying synthetic mica powder was used to prepare a resin sheet cured product. Evaluation results of electrical degradation lifetime and measurement results of thermal conductivity of the obtained resin sheet cured product are listed in Table 2.

(Example 13)

An epoxy resin varnish was prepared in the same manner as in Example 9 except that synthetic mica powder having an average particle diameter of 4 μm collected by classifying synthetic mica powder was used to prepare a resin sheet cured product. Evaluation results of electrical degradation lifetime and measurement results of thermal conductivity of the obtained resin sheet cured product are listed in Table 2.

(Example 14)

An epoxy resin varnish was prepared in the same manner as in Example 9 except that synthetic mica powder having an average particle diameter of 7 μm collected by classifying synthetic mica powder was used to prepare a resin sheet cured product. Evaluation results of electrical degradation lifetime and measurement results of thermal conductivity of the obtained resin sheet cured product are listed in Table 2.

(Example 15)

An epoxy resin varnish was prepared in the same manner as in Example 9 except that synthetic mica powder having an average particle diameter of 10 μm collected by classifying synthetic mica powder was used to prepare a resin sheet cured product. Evaluation results of electrical degradation lifetime and measurement results of thermal conductivity of the obtained resin sheet cured product are listed in Table 2.

(Example 16)

An epoxy resin varnish was prepared in the same manner as in Example 9 except that synthetic mica powder having an average particle diameter of 0.1 μm collected by classifying synthetic mica powder was used to prepare a resin sheet cured product. Evaluation results of electrical degradation lifetime and measurement results of thermal conductivity of the obtained resin sheet cured product are listed in Table 2.

[Table 1]

| | Varnish formulation | | | | | | Insulating sheet | |
|---|---|---|---|---|---|---|---|---|
| | Epoxy resin | % by volume with regard to total amount of alumina | | | | % by volume with regard to total solid content | Electrical degradation lifetime (min) | Thermal conductivity (W/(m·K)) |
| | | Alumina filler (Value in parentheses is % by volume with regard to total solid content) | | | | Mica (5 μm) | | |
| | | Filler X (18 μm) | Filler Y (3 μm) | Filler Z (0.4 μm) | Total | | | |
| Example 1 | Cyclohexyl benzoate-type epoxy resin | 72.5 (54.5) | 5.8 (4.4) | 21.7 (16.3) | 75.2 | 0.1 | 900 | 8.5 |
| Example 2 | | 72.5 (53.8) | 5.8 (4.3) | 21.7 (16.1) | 74.2 | 1.3 | 1500 | 8.0 |
| Example 3 | | 72.5 (51.7) | 5.8 (4.1) | 21.7 (15.5) | 71.3 | 5.2 | 1630 | 7.5 |
| Example 4 | Biphenyl-type epoxy resin (YL6121H) | 72.5 (54.5) | 5.8 (4.4) | 21.7 (16.3) | 75.2 | 0.1 | 950 | 7,0 |
| Example 5 | | 72.5 (53.8) | 5.8 (4.3) | 21.7 (16.1) | 74.2 | 1.3 | 1550 | 6.0 |
| Example 6 | | 72.5 (51.7) | 5.8 (4.1) | 21.7 (15.5) | 71.3 | 5.2 | 1640 | 5.2 |
| Example 7 | Triphenyl methane-type epoxy resin (EPPN-502H) | 72.5 (54.5) | 5.8 (4.4) | 21.7 (16.3 | 75.2 | 0.1 | 1000 | 5.8 |
| Example 8 | | 72.5 (53.8) | 5.8 (4.3) | 21.7 (16.1) | 74.2 | 1.3 | 1600 | 5.5 |
| Example 9 | | 72.5 (51.7) | 5.8 (4.1) | 21.7 (15.5) | 71.3 | 5.2 | 1700 | 5.2 |
| Comparative Example 1 | | 72.5 (54.5) | 5.8 (4.4) | 21.7 (16.3) | 75.1 | 0 | 410 | 5.8 |
| Example 10 | | 65.0 (47.5) | 10.0 (7.3) | 25.0 (18.3) | 73.1 | 10.4 | 1720 | 4.5 |
| Comparative Example 2 | | 70.1 (51.9) | 19.0 (14.1) | 10.9 (8.1) | 74.1 | 1.3 | 500 | 6.0 |
| Comparative Example 3 | | 21.9 (16.2) | 35.8 (26.5) | 42.3 (31.4) | 74.1 | 1.3 | 680 | 4.5 |
| Example 11 | | 94.9 (70.3) | 0.7 (0.5) | 4.4 (3.3) | 74.1 | 1.3 | 700 | 5.5 |

[Table 2]

<table>
<tr><td rowspan="4"></td><td colspan="5">Varnish formulation</td><td colspan="2">Insulating sheet</td></tr>
<tr><td rowspan="3">epoxy resin</td><td colspan="4">Particle diameter (μm)</td><td rowspan="3">Electrical degradation lifetime (min)</td><td rowspan="3">Thermal conductivity (W/(m·K))</td></tr>
<tr><td colspan="3">Alumina filler (71.3% by volume)</td><td rowspan="2">Mica (5.2% by volume)</td></tr>
<tr><td>Filler X (51.7% by volume)</td><td>Filler Y (4.1% by volume)</td><td>Filler Z (15.5% by volume)</td></tr>
<tr><td>Example 12</td><td rowspan="5">Triphenyl methane-type epoxy resin (EPPN-502H)</td><td rowspan="5">18</td><td rowspan="5">3</td><td rowspan="5">0.4</td><td>1</td><td>1400</td><td>5.4</td></tr>
<tr><td>Example 13</td><td>4</td><td>1600</td><td>5.5</td></tr>
<tr><td>Example 14</td><td>7</td><td>1650</td><td>5.6</td></tr>
<tr><td>Example 15</td><td>10</td><td>1700</td><td>5.6</td></tr>
<tr><td>Example 16</td><td>0.1</td><td>610</td><td>5.4</td></tr>
</table>

Table 3 collectively describes ratios of the filler group (A), the filler group (B), and the filler group (C) in the epoxy resin varnish (resin composition) prepared in each Example and Comparative Example.

[Table 3]

| | Ratio of filler group (A) (% by volume) | Ratio of filler group (B) (% by volume) | Ratio of filler group (C) (% by volume) |
|---|---|---|---|
| Example 1 | 72.5 | 9.5 | 18.0 |
| Example 2 | 72.5 | 9.5 | 18.0 |
| Example 3 | 72.5 | 9.5 | 18.0 |
| Example 4 | 72.5 | 9.5 | 18.0 |
| Example 5 | 72.5 | 9.5 | 18.0 |
| Example 6 | 72.5 | 9.5 | 18.0 |
| Example 7 | 72.5 | 9.5 | 18.0 |
| Example 8 | 72.5 | 9.5 | 18.0 |
| Example 9 | 72.5 | 9.5 | 18.0 |
| Example 10 | 65.0 | 14.2 | 20.8 |
| Example 11 | 94.9 | 1.4 | 3.7 |
| Example 12 | 72.5 | 9.5 | 18.0 |
| Example 13 | 72.5 | 9.5 | 18.0 |
| Example 14 | 72.5 | 9.5 | 18.0 |
| Example 15 | 72.5 | 9.5 | 18.0 |
| Example 16 | 72.5 | 9.5 | 18.0 |
| Comparative Example 1 | 72.5 | 9.5 | 18.0 |
| Comparative Example 2 | 70.1 | 20.8 | 9.1 |

(continued)

| | Ratio of filler group (A) (% by volume) | Ratio of filler group (B) (% by volume) | Ratio of filler group (C) (% by volume) |
|---|---|---|---|
| Comparative Example 3 | 21.9 | 42.9 | 35.2 |

From Examples 1 to 3 of Table 1, it can be seen that when the content ratio of mica is in the range of from 0.1% by volume to 5.2% by volume based on the total solid content, the electrical degradation lifetime is long. From Examples 4 to 9, it can be seen that even when the epoxy resin is a biphenyl-type epoxy resin or a triphenylmethane-type epoxy resin, addition of mica leads to long electrical degradation lifetime. From Comparative Example 1, it can be seen that the electrical degradation lifetime is short with no addition of mica. From Example 10, it can be seen that when the amount of mica added is 10.4% by volume, the electrical degradation lifetime is long, but the thermal conductivity is low. From Comparative Example 2, it can be seen that when the % by volume of the filler group (B) is larger than the % by volume of the filler group (C), the electrical degradation lifetime is short. From Comparative Example 3, it can be seen that when the % by volume of the filler group (A) is small and the % by volume of the filler group (B) is larger than the % by volume of the filler group (C), the electrical degradation lifetime is short. From Example 11, it can be seen that when the % by volume of the filler group (A) is large, and the % by volume of the filler groups (B) and (C) are too small, the electrical degradation lifetime is slightly short.

From Examples 12 to 16 in Table 2, it can be seen that when the average particle diameter of mica is from 1 μm to 10 μm, the electrical degradation lifetime is long, and when the average particle diameter of mica is 0.1 μm, the electrical degradation lifetime is short.

All publications, patent applications, and technical standards mentioned in this specification are herein incorporated by reference to the same extent as if such individual publication, patent application, or technical standard was specifically and individually indicated to be incorporated by reference.

## Claims

1. A resin composition comprising:

    a thermosetting resin;
    a thermally conductive filler; and
    mica,
    wherein, when the thermally conductive filler is divided into a filler group (A) having a particle diameter of from 10 μm to 100 μm, a filler group (B) having a particle diameter of from 1.0 μm to smaller than 10 μm, and a filler group (C) having a particle diameter of from 0.1 μm to smaller than 1.0 μm, a ratio of the filler group (C) with regard to the thermally conductive filler, based on volume, is larger than a ratio of the filler group (B) with regard to the thermally conductive filler, based on volume.

2. The resin composition according to claim 1, wherein, when a total volume of the thermally conductive filler is 100% by volume, a ratio of the filler group (A) is from 50% by volume to 90% by volume, a ratio of the filler group (B) is from 1% by volume to 30% by volume, and a ratio of the filler group (C) is from 5% by volume to 40% by volume.

3. The resin composition according to claim 1 or 2, wherein an average particle diameter of the mica is from 1 μm to 10 μm.

4. The resin composition according to any one of claims 1 to 3, wherein a content ratio of the mica is from 0.1% by volume to 5% by volume with regard to a total solid content.

5. The resin composition according to any one of claims 1 to 4, wherein a content ratio of the thermally conductive filler is from 60% by volume to 80% by volume with regard to a total solid content.

6. The resin composition according to any one of claims 1 to 5, wherein the thermosetting resin comprises an epoxy monomer having a mesogenic structure or a polymer thereof.

7. The resin composition according to any one of claims 1 to 6, wherein the thermally conductive filler comprises alumina.

**8.** A resin sheet formed by molding the resin composition according to any one of claims 1 to 7 into a sheet shape.

**9.** A prepreg comprising:

a fiber substrate; and
the resin composition according to any one of claims 1 to 7, impregnated in the fiber substrate.

**10.** An insulator comprising a cured product of the resin composition according to any one of claims 1 to 7.

**11.** A resin sheet cured product that is a heat-treated product of the resin sheet according to claim 8.

**12.** A heat dissipator comprising:

a first metal member;
a second metal member; and
a resin cured product layer that is a cured product of the resin composition according to any one of claims 1 to 7, disposed between the first metal member and the second metal member.

**13.** The heat dissipator according to claim 12, wherein an average thickness of the resin cured product layer is from 100 $\mu$m to 300 $\mu$m.

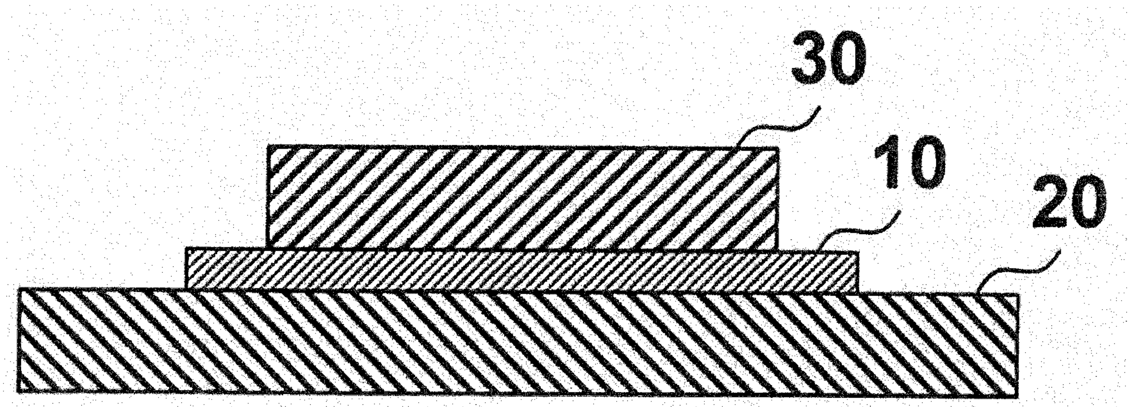


FIG.1

## INTERNATIONAL SEARCH REPORT

International application No.
PCT/JP2016/065360

A. CLASSIFICATION OF SUBJECT MATTER
*C08L101/00*(2006.01)i, *B32B15/08*(2006.01)i, *C08J5/24*(2006.01)i, *C08K3/22*(2006.01)i, *C08L63/00*(2006.01)i, *C09K5/14*(2006.01)i, *H01B3/40*(2006.01)i

According to International Patent Classification (IPC) or to both national classification and IPC

B. FIELDS SEARCHED

Minimum documentation searched (classification system followed by classification symbols)
C08L101/00, B32B15/08, C08J5/24, C08K3/22, C08L63/00, C09K5/14, H01B3/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2005-171209 A (Toyota Motor Corp.), 30 June 2005 (30.06.2005), claims; paragraphs [0020], [0028]; example 10 (Family: none) | 1,3-13<br>2 |
| X | JP 11-92627 A (Yaskawa Electric Corp.), 06 April 1999 (06.04.1999), claims; paragraph [0004]; examples (Family: none) | 1-13 |
| A | JP 6-207044 A (Kuraray Co., Ltd.), 26 July 1994 (26.07.1994), paragraph [0002] (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 June 2016 (09.06.16) | 21 June 2016 (21.06.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/065360

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/208694 A1 (Hitachi Chemical Co., Ltd.), 31 December 2014 (31.12.2014), the entire description & CN 105339413 A & TW 201512292 A & KR 10-2016-0024917 A | 1-13 |
| A | JP 56-79161 A (Somar Manufacturing Co., Ltd.), 29 June 1981 (29.06.1981), the entire specification (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005206814 A
- JP 2014201610 A
- JP 5471975 B